# EUROPEAN PATENT APPLICATION

(11) **EP 4 606 242 A1**
(43) Date of publication of application: **27.08.2025**
(21) Application number: 22962720.3
(22) Date of filing: 19.10.2022
(51) Int. Cl.: A24F 40/51

(54) **AEROSOL GENERATING DEVICE**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/038863
(87) International publication number: WO 2024/084608

(57) **Abstract**

An aerosol generating device comprises: a main body 100 having a heating unit 170 and a heating control unit 161 for controlling heating by the heating unit 170; and a cover attached to the main body 100, the cover comprises an acceleration sensor, and the heating control unit 161 controls operation of the heating unit 170 on the basis of a value of acceleration detected by the acceleration sensor.

## Description

### [Technical Field]

The present invention relates to an aerosol generating device.

### [Background Art]

For example, the inhalation device disclosed in PTL 1 has a detachable panel on a housing of a main body, and comprises: a heating unit for heating an inhalation component source for generating an inhalation component; a power source unit for supplying power to the heating unit; a sensor unit for detecting attachment of the panel to the housing and measuring data associated with the panel; a memory unit for storing a plurality of operating profiles; and a control unit for specifying the operating profile associated with the data measured by the sensor unit, and operating the inhalation device in accordance with the operating profile. The main body then comprises an operation button on a surface of the housing to which the panel is attached, and the control unit is configured to permit the supply of power from the power source unit to the heating unit when the data measured by the sensor unit is a value within a predetermined range and the operation button has also been pressed through the panel.

### [Citation List]

### [Patent Literature]

[PTL 1] WO 2022/079896 A1

### [Summary of Invention]

### [Technical Problem]

In a configuration where the supply of power to a heating unit is permitted when an operation button provided on a main body has been pressed through a member which is detachable from a housing of a main body (this member is the "panel" in the inhalation device disclosed in PTL 1), there is a risk of a user experiencing a considerable burden from this operation.

The objective of the present disclosure lies in providing an aerosol generating device capable of lightening the user operating burden through a member which is detachable from a main body.

### [Solution to Problem]

The present disclosure, which was completed on the basis of this objective, constitutes an aerosol generating device comprising: a main body having a heating unit and a heating control unit for controlling heating by the heating unit; and a cover attached to the main body, wherein the cover comprises an acceleration sensor, and the heating control unit controls operation of the heating unit on the basis of a value of acceleration detected by the acceleration sensor.

Here, the heating control unit may permit heating by the heating unit when the value of acceleration detected by the acceleration sensor exceeding a predetermined value has occurred a predetermined number of times within a predetermined period.

Furthermore, the heating control unit may stop heating by the heating unit when the value of acceleration detected by the acceleration sensor exceeding a predetermined value has occurred a predetermined number of stop times within a predetermined period after heating by the heating unit has started.

The aerosol generating device may further comprise a reporting unit for reporting a state of charging when the value of acceleration detected by the acceleration sensor exceeding a predetermined value has occurred a predetermined number of times within a predetermined period.

Furthermore, the aerosol generating device may further comprise a diagnostic unit for diagnosing, on the basis of the value of acceleration detected by the acceleration sensor, a fault in a vibration generating device for causing vibration of the main body.

### [Advantageous Effects of Invention]

The present disclosure makes it possible to provide an aerosol generating device capable of lightening the user operating burden through a member which is detachable from a main body.

### [Brief Description of Drawings]

[Fig. 1] is an exemplary diagram in which an aerosol generating device is viewed from diagonally above from the front.
[Fig. 2] is an exemplary diagram viewed from diagonally below from the front of the aerosol generating device.
[Fig. 3] is an exemplary diagram in which a main body with a cover removed is viewed from a front side.
[Fig. 4] is an exemplary diagram in which the cover is viewed from a rear side.
[Fig. 5] is an exemplary diagram schematically showing a configuration example of the main body.
[Fig. 6] is an exemplary diagram schematically showing the configuration of the cover.
[Fig. 7] is a flowchart showing an example of heating control processing performed by a control unit.
[Fig. 8] is a flowchart showing an example of heating control processing performed by the control unit.

### [Description of Embodiments]

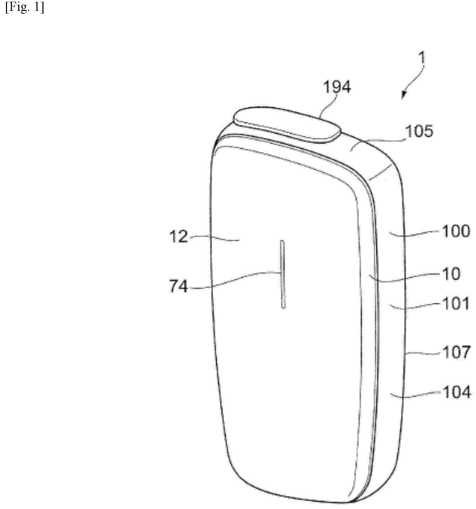

Fig. 1 is an exemplary diagram in which an aerosol generating device 1 is viewed from diagonally above from the front.

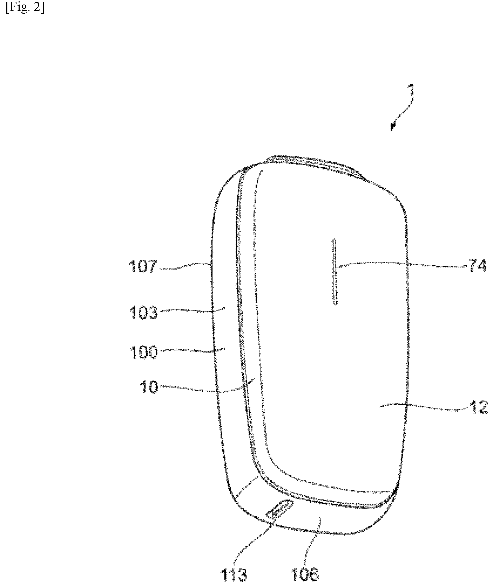

Fig. 2 is an exemplary diagram viewed from diagonally below from the front of the aerosol generating device 1.

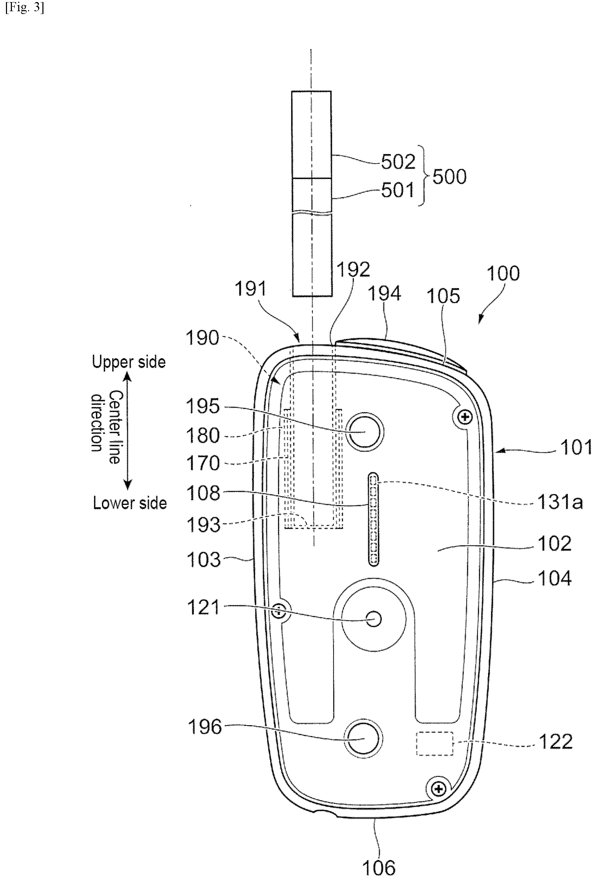

Fig. 3 is an exemplary diagram in which a main body 100 with a cover 10 removed is viewed from a front side.

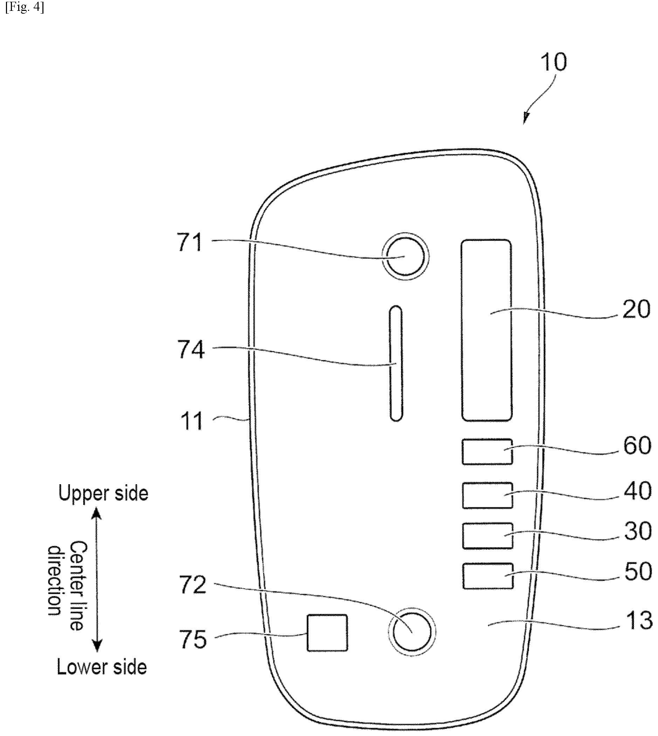

Fig. 4 is an exemplary diagram in which the cover 10 is viewed from a rear side.

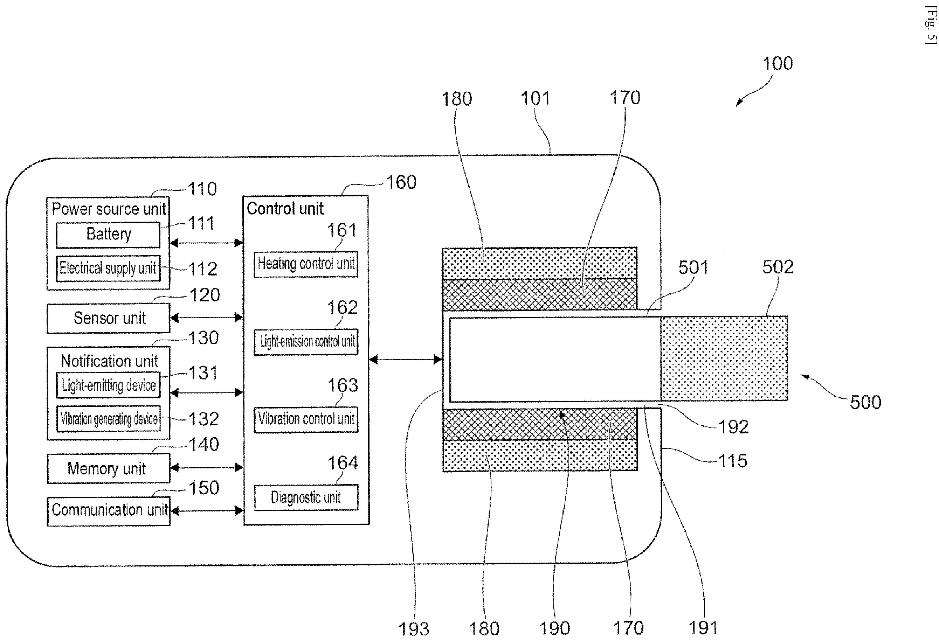

Fig. 5 is an exemplary diagram schematically showing a configuration example of the main body 100.

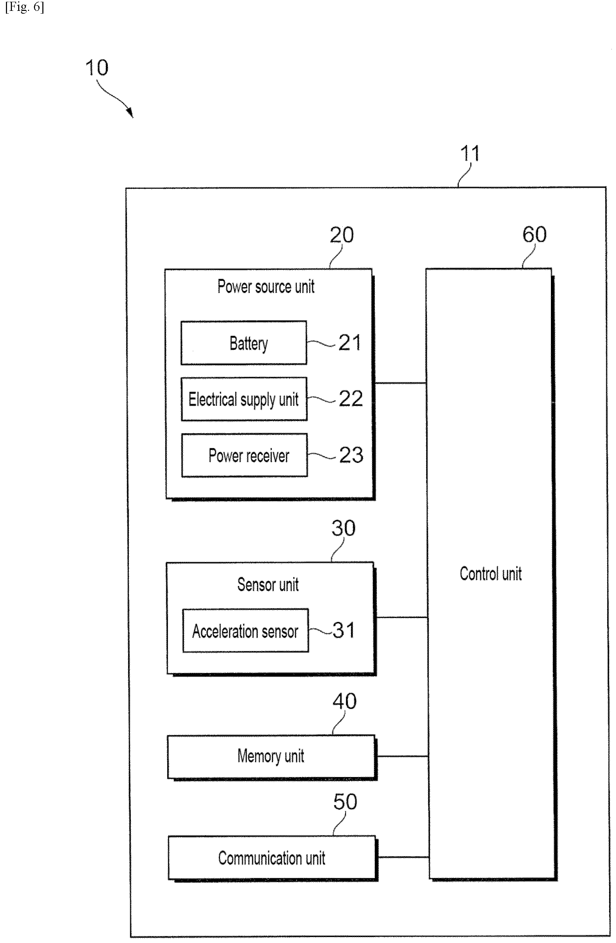

Fig. 6 is an exemplary diagram schematically showing the configuration of the cover 10.

An aerosol generating device 1 (which may be referred to below simply as a "generating device 1") comprises: a main body 100 having a heating unit 170 for heating a substrate 500 that contains an aerosol source (this may be referred to below simply as a "substrate 500"); and a cover 10 which is detachable from the main body 100.

The main body 100 comprises a substantially cuboid housing 101 accommodating the heating unit 170, etc. The cover 10 covers one face of the housing 101. Among the six faces of the housing 101, a face to which the cover 10 is attach will be referred to as a front face 102, a side face on the left-hand side as seen from the front face 102 side will be referred to as a left side face 103, a side face on the right-hand side will be referred to as a right side face 104, a face on the upper side will be referred to as an upper face 105, and a face on the lower side will be referred to as a bottom face 106. Furthermore, among the six faces of the housing 101, a face other than the front face 102 connecting to the left side face 103, right side face 104, upper face 105 and bottom face 106 will be referred to as a back face 107. The cover 10 covers the front face 102 of the housing 101, while the left side face 103, right side face 104, upper face 105, bottom face 106, and back face 107 are exposed to the outside while the cover 10 is attached

### (Main body 100)

As shown in fig. 5, the main body 100 comprises: a power source unit 110, a sensor unit 120, a notification unit 130, a memory unit 140, a communication unit 150, a control unit 160, a heating unit 170, a heat insulating portion 180, and a holding portion 190. The power source unit 110, sensor unit 120, notification unit 130, memory unit 140, communication unit 150, control unit 160, heating unit 170, and heat insulating portion 180 are accommodated inside the housing 101. Furthermore, the main body 100 comprises a shutter 194 (see fig. 1) which is disposed on the upper face 105 and can be slidably operated along the upper face 105.

The components will be described in order below.

### ((Power source unit 110))

The power source unit 110 comprises a battery 111 for storing power, and an electrical supply unit 112 for supplying power.

A rechargeable battery such as a lithium ion secondary battery may be given as an example of the battery 111. The battery 111 may be charged by being connected to an external power source by means of a cable or the like connected to a USB (universal serial bus) terminal 113. Furthermore, the battery 111 may also be charged by means of wireless power transmission technology, without being connected to a power transmission-side device. Additionally, it may also be possible to remove only the battery 111 from the main body 100, and it may be possible to replace said battery 111 with a new battery 111.

The electrical supply unit 112 supplies power to the components of the main body 100 in accordance with control performed by the control unit 160. The electrical supply unit 112 furthermore supplies power to the cover 10.

The electrical supply unit 112 supplies power to the cover 10 by means of contactless power transmission, for example. Power transmission by means of short-range wireless communication is an example of contactless power transmission. This enables power to be supplied to the cover 10 using a simple configuration.

### ((Sensor unit 120))

The sensor unit 120 detects various types of information relating to the main body 100. The sensor unit 120 then outputs the detected information to the control unit 160. By way of example, the sensor unit 120 may comprise a pressure sensor such as a microphone capacitor, a flow rate sensor, and a temperature sensor. When the sensor unit 120 has detected a numerical value associated with inhalation by a user, the sensor unit 120 then outputs, to the control unit 160, information indicating that the user has inhaled. As another example, the sensor unit 120 is configured by an input device, such as a button or switch, for receiving input of information from the user. The sensor unit 120 may especially comprise a button for instructing starting/stopping of aerosol generation. The sensor unit 120 then outputs to the control unit 160 the information input by the user.

As a button, the sensor unit 120 comprises an operation button 121 that enables starting of aerosol generation to be instructed. As shown in fig. 3, the operation button 121 is provided so as to be exposed from the front face 102 of the housing 101.

### ((Notification unit 130))

The notification unit 130 comprises a light-emitting device 131 and a vibration generating device 132 for generating vibration. The light-emitting device 131 comprises a plurality of (eight in this embodiment) LEDs (light-emitting diodes) 131a. By way of example, the plurality of LEDs 131a may be arranged in a row following a center line direction of the substrate 500 while the substrate 500 is held in the holding portion 190 (this may be referred to below simply as the "center line direction"). The plurality of LEDs 131a emit light with different light emission patterns when the battery 111 in the power source unit 110 needs to be charged, when the battery 111 is in the process of charging, and when there is an abnormality in the main body 100, etc. The light emission patterns as referred to here generally include colors and timing of illumination/extinguishing.

A vibration motor having a weight with an offset center of gravity (eccentric weight) mounted on a rotary shaft may be given as an example of the vibration generating device 132. The vibration generating device 132 causes different patterns of vibration to be generated when heating by the heating unit 170 has started and when inhalation is possible, etc.

Instead of or as well as the light-emitting device 131 and the vibration generating device 132, the notification unit 130 may also comprise a display device for displaying images and/or a sound output device for outputting sound, etc.

### ((Memory unit 140))

The memory unit 140 stores various types of information for operation of the generating device 1. The memory unit 140 is configured by a non-volatile storage medium such as a flash memory, for example. Information relating to the operating system (OS) of the generating device 1, such as the content of control by the control unit 160 of various types of components, is an example of the information stored in the memory unit 140. Another example of the information stored in the memory unit 140 is information relating to inhalation by the user, such as number of inhalations, times of inhalation, and cumulative inhalation time.

### ((Communication unit 150))

The communication unit 150 is a communication interface for sending and receiving information between the generating device 1 and another device. The communication unit 150 performs communication conforming to any wired or wireless communication standard. Examples of communication standards which may be used include wireless LAN (local area network), wired LAN, Wi-Fi (registered trademark), and Bluetooth (registered trademark), etc. As one example, the communication unit 150 sends information relating to inhalation by the user to another device (e.g., a portable terminal such as a cell phone) in order to cause the other device to display the information relating to inhalation by the user. As another example, the communication unit 150 receives new OS information from a server in order to update the OS information stored in the memory unit 140.

### ((Control unit 160))

The control unit 160 functions as an arithmetic processing device and a control device, controlling overall operation within the generating device 1 in accordance with various programs. The control unit 160 is realized by a CPU (Central Processing Unit) and an electronic circuit such as a microprocessor, for example. The control unit 160 may also include a ROM (read-only memory) for storing programs and computation parameters, etc. which are used, and a RAM (random access memory) for temporarily storing suitably changing parameters, etc. The generating device 1 implements various types of processing on the basis of control performed by the control unit 160. Examples of processing controlled by the control unit 160 include: supply of electricity from the power source unit 110 to other components; charging of the power source unit 110; detection by the sensor unit 120; notification of information by the notification unit 130; storage and reading of information by the memory unit 140; and sending/receiving of information by the communication unit 150. Other processing implemented by the generating device 1, such as processing based on input of information to each component and information output from each component, are also controlled by means of the control unit 160.

The control unit 160 comprises: a heating control unit 161 for controlling heating of the heating unit 170; and a light-emission control unit 162 for controlling emission of light by the light-emitting device 131. The control unit 160 furthermore comprises: a vibration control unit 163 for controlling vibration by the vibration generating device 132; and a diagnostic unit 164 for diagnosing faults in the vibration generating device 132. The heating control unit 161, the light-emission control unit 162, the vibration control unit 163, and the diagnostic unit 164 will be described in detail later.

### ((Heating unit 170))

The heating unit 170 heats the aerosol source and thereby atomizes the aerosol source to generate an aerosol. The heating unit 170 is formed by any material such as a metal or polyimide. For example, the heating unit 170 is configured in a film shape and disposed so as to cover the outer circumference of the holding portion 190. When the heating unit 170 generates heat, the aerosol source contained in the substrate 500 is then heated from the outer circumference of the substrate 500 and atomized, generating the aerosol. The heating unit 170 generates heat when supplied with electricity from the power source unit 110, heating the substrate 500. When the temperature of the substrate 500 heated by means of the heating unit 170 has reached a predetermined temperature, inhalation by the user is then possible. After this, the electrical supply may be stopped when the sensor unit 120 has detected that there has been predetermined user input.

### ((Heat insulating portion 180))

The heat insulating portion 180 prevents heat transfer from the heating unit 170 to other components of the generating device 1. The heat insulating portion 180 is disposed so as to cover at least the outer circumference of the heating unit 170. For example, the heat insulating portion 180 is configured by a vacuum insulating material or an aerogel insulating material, etc. It should be noted that a vacuum insulating material is a heat insulating material in which a state of high vacuum is created by wrapping glass wool and silica (silicon powder), etc. in a resin film, for example, so that heat conduction by gas is as close as possible to zero.

### ((Holding portion 190))

The holding portion 190 comprises: a columnar internal space 191 provided inside the housing 101; and an opening 192 formed on the upper face 105 of the housing 101 in order to allow the internal space 191 to communicate with the outside. The internal space 191 is a cylindrical body having a bottom portion 193 serving as a bottom face. The holding portion 190 is configured so that the inner diameter of at least part of the cylindrical body in a height direction is smaller than the outer diameter of the substrate 500, and is capable of holding the substrate 500, which has been inserted from the opening 192 into the internal space 191, so as to press the substrate 500 from the outer circumference thereof. The holding portion 190 also has a function for defining a flow path for air passing through the substrate 500. An air inflow hole which is an inlet for air into the flow path is disposed in the bottom portion 193, for example. Meanwhile, the opening 192 forms an air outflow hole, which is an outlet for air from the flow path. The opening 192 is exposed by sliding the shutter 194 to an open position, and hidden by sliding the shutter 194 to a closed position.

### ((Shutter 194))

The shutter 194 has a magnet on a rear face thereof. Meanwhile, a magnetic sensor (not depicted) of the sensor unit 120 is attached to the upper face 105 of the housing 101 in a range of mobility of the shutter 194. The magnetic sensor is a Hall IC formed by a Hall element and an operational amplifier, etc., and outputs a voltage commensurate with the intensity of the magnetic field passing across the Hall element. In this embodiment, the control unit 160 detects opening and closing of the shutter 194 from a change in the voltage output from the magnetic sensor accompanying sliding of the shutter 194.

### ((Substrate 500))

The substrate 500 is a stick-shaped member. The substrate 500 comprises a substrate portion 501 and a mouthpiece portion 502.

The substrate portion 501 comprises an aerosol source. The aerosol source is atomized by heating so as to generate an aerosol. The aerosol source may be, for example, a tobacco-derived substance such as shredded tobacco, or a processed product obtained by molding a tobacco raw material into a granular form, a sheet form, or a powder form. Furthermore, the aerosol source may also contain a non-tobacco-derived substance produced from a plant other than tobacco (e.g., mint or herb, etc.). As one example, the aerosol source may contain a flavoring component such as menthol. When the generating device 1 is a medical inhaler, the aerosol source may contain a drug to be inhaled by a patient. It should be noted that the aerosol source is not limited to a solid, and may equally be a polyhydric alcohol such as glycerol or propylene glycol, or a liquid such as water, for example. In a state in which the substrate 500 is being held in the holding portion 190, at least part of the substrate portion 501 is accommodated in the internal space 191 of the holding portion 190.

The mouthpiece portion 502 is a member which is held in the user's mouth during inhalation. In a state in which the substrate 500 is being held in the holding portion 190, at least part of the mouthpiece portion 502 protrudes from the opening 192. When the user then inhales with the mouthpiece portion 502, which protrudes from the opening 192, held in the mouth, air flows into the holding portion 190 from the air inflow hole which is not depicted. The air which has flowed in passes through the internal space 191 of the holding portion 190, that is, through the substrate portion 501, and reaches the user's mouth together with the aerosol generated from the substrate portion 501.

### ((Configuration example of external appearance of main body 100))

As shown in fig. 3, the main body 100 comprises an upper magnet 195 and a lower magnet 196, which are two magnets provided so as to be exposed from the front face 102 of the housing 101 and are used for joining with the cover 10. The upper magnet 195 and the lower magnet 196 have a cylindrical shape which is circular when seen from the front. The centers of the circles of the upper magnet 195 and the lower magnet 196 are aligned in the center line direction, with the upper magnet 195 being provided on an upper portion of the main body 100 and the lower magnet 196 being provided on a lower portion of the main body 100.

The main body 100 comprises an operation button 121 which is provided in a central portion in the center line direction so as to be exposed from the front face 102 of the housing 101. In other words, the operation button 121 is disposed between the upper magnet 195 and the lower magnet 196.

The main body 100 comprises a display window 108 above the operation button 121 and between the upper magnet 195 and the operation button 121, the display window 108 transmitting light from the plurality of LEDs 131a to a display window 74 (to be described later) in the cover 10. The display window 108 is a window provided at a position corresponding to positions of the plurality of LEDs 131a disposed inside the housing 101 of the main body 100, and transmits the light from the plurality of LEDs 131a to the display window 74 in the cover 10. This allows a user to see the light from the outside surface of the cover 10.

The main body 100 comprises a magnetic sensor 122. The magnetic sensor 122 detects a magnetic force based on a magnetic field applied from a magnet 75 (to be described later) of the cover 10. For example, the magnetic sensor 122 should be a Hall sensor configured using a Hall element. This enables attachment of the cover 10 to the main body 100 to be detected.

### (Cover 10)

The cover 10 will be described in detail below.

As shown in fig. 6, the cover 10 comprises: a cover main body 11, a power source unit 20, a sensor unit 30, a memory unit 40, a communication unit 50, and a control unit 60.

### ((Cover main body 11))

The cover main body 11 is shaped into a plate form from a light-transmitting member, and is shaped so as to cover the front face 102 of the housing 101 of the main body 100, and so as not to form a step with the left side face 103, right side face 104, upper face 105, and bottom face 106 of the housing 101. The cover 10 thus has a decorative function, forming an integrated external appearance with the left side face 103, right side face 104, upper face 105, and bottom face 106 of the housing 101. The cover 10 furthermore has a function of suppressing propagation of heat released from the main body 100. The power source unit 20, sensor unit 30, memory unit 40, communication unit 50, and control unit 60 are attached to the cover main body 11.

### ((Power source unit 20))

The power source unit 20 comprises: a battery 21 for storing power; an electrical supply unit 22 for supplying power to each component on the cover 10; and a power receiver 23 for receiving power from the electrical supply unit 112 in the power source unit 110 of the main body 100.

A rechargeable battery such as a lithium ion secondary battery formed into a film shape may be given as an example of the battery 21, for example. The battery 21 is charged by means of power supplied to the cover 10 from the electrical supply unit 112 in the power source unit 110 of the main body 100.

The electrical supply unit 22 supplies each component on the cover 10 with power from the battery 21. Furthermore, the electrical supply unit 22 supplies each component on the cover 10 with power received by the power receiver 23. This enables each component on the cover 10, including the sensor unit 30, to be operated by means of power supplied to the cover 10 from the main body 100.

When the electrical supply unit 112 in the main body 100 supplies power to the cover 10 by means of contactless power transmission, such as short-range wireless communication, the power receiver 23 comprises an NFC (near field communication) reader/writer module and an NFC antenna, etc.

### ((Sensor unit 30))

The sensor unit 30 comprises an acceleration sensor 31. A capacitive acceleration sensor comprising a fixed electrode and a movable electrode formed from silicon, and a sensor element configured by a spring or the like may be given as an example of the acceleration sensor 31. The acceleration sensor 31 may equally be a piezoresistance or heat-detection acceleration sensor.

### ((Memory unit 40))

The memory unit 40 stores various types of information for operation of the cover 10. The memory unit 40 is configured by a non-volatile storage medium such as a flash memory, for example. Information relating to the operating system (OS) of the cover 10, such as the content of control by the control unit 60 of various types of components, is an example of the information stored in the memory unit 40. Furthermore, the memory unit 40 stores information acquired from the sensor unit 30.

### ((Communication unit 50))

The communication unit 50 is a communication interface for sending and receiving information between the cover 10 and the main body 100. By way of example, the communication unit 50 may communicate with the main body 100 by means of short-range wireless communication. As indicated above, it is possible to realize efficient communication and power transfer between the main body 100 and the cover 10 by using short-range wireless communication to supply power from the main body 100 to the cover 10 and by using short-range wireless communication for the communication unit 50 to communicate with the main body 100, making it possible to simplify the configuration of the main body 100 and the cover 10. It should be noted that when short-range wireless communication is used to supply power from the main body 100 to the cover 10, and short-range wireless communication is used for the communication unit 50 to communicate with the main body 100, the communication unit 50 may be realized by means of an NFC reader/writer module and an NFC antenna, etc. identical to those of the power receiver 23.

Moreover, when the main body 100 and the cover 10 are connected via a physical power supply interface, the communication unit 50 may communicate with the main body 100 via this power supply interface.

### ((Control unit 60))

The control unit 60 functions as an arithmetic processing device and a control device, controlling overall operation within the cover 10 in accordance with various programs. The control unit 60 is realized by a CPU and an electronic circuit such as a microprocessor, for example. The control unit 60 may also include a ROM for storing programs and computation parameters, etc. which are used, and a RAM for temporarily storing suitably changing parameters, etc. The cover 10 implements various types of processing on the basis of control performed by the control unit 60. Examples of processing controlled by the control unit 60 include: supply of electricity from the power source unit 20 to other components; charging of the power source unit 20; detection by the sensor unit 30; storage and reading of information by the memory unit 40; and sending/receiving of information by the communication unit 50. Other processing implemented by the cover 10, such as processing based on input of information to each component and information output from each component, are also controlled by means of the control unit 60.

Furthermore, the control unit 60 sends and receives data to and from the control unit 160 in the main body 100 via the communication unit 50. For example, the control unit 60 acquires detection values of the acceleration sensor 31 in the sensor unit 30, and, when the value of acceleration detected by the acceleration sensor 31 exceeds a predetermined value which will be described later, the control unit 60 sends the fact that the predetermined value has been exceeded to the control unit 160 in the main body 100 via the communication unit 50. Similarly, when the value of acceleration detected by the acceleration sensor 31 exceeds a reference value which will be described later, the control unit 60 sends the fact that the reference value has been exceeded to the control unit 160 in the main body 100 via the communication unit 50.

### ((Magnets))

As shown in fig. 4, the cover 10 comprises an upper magnet 71 and a lower magnet 72 on a back face 13 of the cover main body 11, which is the face on the main body 100 side. The upper magnet 71 and the lower magnet 72 have a cylindrical shape which is circular when seen from the rear side, and are provided at positions respectively corresponding to the upper magnet 195 and the lower magnet 196 provided on the main body 100. That is to say, the upper magnet 71 and the lower magnet 72 are aligned in the center line direction, with the upper magnet 71 being provided on an upper portion of the cover 10 and the lower magnet 72 being provided on a lower portion of the cover 10.

If the upper magnet 71 and the lower magnet 72 on the cover 10 are N poles, then the upper magnet 195 and the lower magnet 196 on the main body 100 are S poles, for example. The cover 10 is attached to the main body 100 by the force of attraction of the magnets.

It should be noted that either the magnets provided on the cover 10 (upper magnet 71, lower magnet 72) or the magnets provided on the main body 100 (upper magnet 195, lower magnet 196) may be metal pieces made of iron or another magnetic metal.

The display window 74 is formed in the cover main body 11 between the upper magnet 71 and the lower magnet 72. The display window 74 is provided at a position corresponding to the display window 108 provided in the main body 100. The cover main body 11 is then formed by a light-transmitting material. As a result, the cover 10 transmits, to the front face 12 of the cover main body 11, the light emitted from the light-emitting device 131 provided in the main body 100.

The cover 10 comprises the magnet 75 to the left of a line joining the upper magnet 71 and the lower magnet 72 in fig. 4. The magnet 75 is provided at a position corresponding to the magnetic sensor 122 provided on the main body 100, and attachment of the cover 10 to the main body 100 is detected by means of the magnetic sensor 122 provided on the main body 100.

In the cover 10 configured in the manner above, the battery 21 is provided on the cover 10 so that even if power supply from the main body 100 to the cover 10 becomes unstable for some reason, power can still be stably supplied to the components on the cover 10 from the battery 21, therefore making it possible to stabilize operation thereof.

Furthermore, since a small amount of power per unit time can be supplied to the cover 10 from the electrical supply unit 112 of the main body 100 by means of contactless power transmission such as short-range wireless communication, there are limits to the components (e.g., the acceleration sensor 31) which can be mounted on the cover 10 when only contactless power transmission is used, but it is possible to increase the degree of freedom in the components which can be mounted on the cover 10 by providing the battery 21.

However, the cover 10 need not be provided with the battery 21, and the cover 10 may be operated using only power supplied from the main body 100 by means of contactless power transmission when the cover 10 is fitted to the main body 100 or when the cover 10 is in the vicinity of the main body 100.

### (Heating control)

The heating control unit 161 in the control unit 160 of the main body 100 permits aerosol generation when the shutter 194 is open and the cover 10 is also attached. In other words, the cover 10 permits heating of the heating unit 170 by means of the main body 100, as a result of the cover 10 being attached to the main body 100. As described above, the control unit 160 is capable of ascertaining that the cover 10 is attached to the main body 100, by using the output value of a Hall sensor.

The heating control unit 161 further controls heating of the heating unit 170 on the basis of output of the sensor unit 30 on the cover 10. To be more specific, the heating control unit 161 permits heating by the heating unit 170 when the value of acceleration detected by the acceleration sensor 31 exceeding a predefined predetermined value has occurred a predefined predetermined number of times within a predefined predetermined period. In other words, the heating control unit 161 permits heating of the heating unit 170 when a notification that the value of acceleration detected by the acceleration sensor 31 has exceeded a predetermined value has been received a predetermined number of times from the control unit 60 on the cover 10 within a predetermined period.

3 seconds may be given as an example of the predetermined period. Three times may be given as an example of the predetermined number of times. By way of example, the predetermined value may be a value which is greater than the acceleration produced in the generating device 1 when a user is walking or running while holding a bag containing the generating device 1, and which is smaller than the acceleration when the user is holding and shaking the generating device 1. For example, the predetermined value is 14.7 (m/s²) (1.5 G in other words).

That is to say, when the shutter 194 is open and the cover 10 is attached, the heating control unit 161 starts heating by the heating unit 170 when the user is holding the generating device 1 and has shaken it three times within 3 seconds.

However, the heating control unit 161 may also permit heating by the heating unit 170 when the operation button 121 has been pressed. For example, when the shutter 194 is open and the cover 10 is also attached, the heating control unit 161 may start heating by the heating unit 170 when the operation button 121 has been continuously pressed for a predefined period (e.g., 2 seconds). Even if the cover 10 is attached to the main body 100, the user is still able to press the operation button 121 of the main body 100 through the cover 10 by causing flexing of a point on the cover 10 corresponding to the operation button 121 of the main body 100.

The heating control unit 161 stops heating by the heating unit 170 when a predefined heating period (e.g., 5 minutes) has elapsed after the start of heating by the heating unit 170. Furthermore, the heating control unit 161 stops heating by the heating unit 170 even before the heating period has elapsed when the value of acceleration detected by the acceleration sensor 31 exceeding the predetermined value has occurred a predefined number of stop times within a predetermined period during heating by the heating unit 170. In other words, the heating control unit 161 stops heating by the heating unit 170 when a notification that the value of acceleration detected by the acceleration sensor 31 has exceeded a predetermined value has been received the number of stop times from the control unit 60 on the cover 10 within a predetermined period. Four times may be given as an example of the number of stop times. However, the number of stop times may be three times, the same as the predetermined number of times.

That is to say, the heating control unit 161 stops heating by the heating unit 170 when the user is holding the generating device 1 and has shaken it four times within 3 seconds during heating by the heating unit 170.

### (Vibration control)

The vibration control unit 163 causes the vibration generating device 132 to operate in a first pattern when the heating control unit 161 has started heating of the heating unit 170. Furthermore, when the temperature of the substrate 500 heated by means of the heating unit 170 has reached a predetermined temperature enabling inhalation by the user, the vibration control unit 163 causes the vibration generating device 132 to operate in a second pattern. By way of example, the first pattern may be a pattern produced by causing the vibration generating device 132 to operate continuously for 2 seconds, for example, and the second pattern may be a pattern produced by causing the vibration generating device 132 to operate twice intermittently for less than 2 seconds, for example. It should be noted that the temperature of the substrate 500 reaching the predetermined temperature may be estimated by using a detection value of the temperature sensor in the sensor unit 120.

The vibration control unit 163 causes the vibration generating device 132 to operate in a third pattern when the heating control unit 161 stops heating of the heating unit 170. By way of example, the third pattern may be a pattern produced by causing the vibration generating device 132 to operate continuously for 1 second, for example. However, the third pattern may be the same as the first pattern or the second pattern.

### (Diagnostics)

The diagnostic unit 164 diagnoses faults in the vibration generating device 132 on the basis of the value of acceleration detected by the acceleration sensor 31. For example, the diagnostic unit 164 diagnoses a fault in the vibration generating device 132 when the vibration control unit 163 has output a command to actuate the vibration generating device 132 but the value of acceleration detected by the acceleration sensor 31 did not exceed a predefined reference value. In other words, the diagnostic unit 164 diagnoses a fault in the vibration generating device 132 when a notification that the value of acceleration detected by the acceleration sensor 31 exceeded a reference value was not received from the control unit 60 on the cover 10 within a predefined reference period after the vibration control unit 163 output the command to actuate the vibration generating device 132. 2 seconds may be given as an example of the reference period. The reference value may be set as follows, for example. For example, first gravitational acceleration produced by a defined number of rotations of the vibration generating device 132, and second gravitational acceleration for when the number of rotations of the vibration generating device 132 is smaller than the defined number of rotations, should be calculated, and the reference value should be set at a value greater than the second gravitational acceleration but smaller than the first gravitational acceleration. For example, the reference value is 4 (m/s²) (0.4 G in other words).

### (Light-emission control)

The light-emission control unit 162 reports a state of charging when the value of acceleration detected by the acceleration sensor 31 exceeding a predetermined value has occurred a predefined number of times within a predetermined period. In other words, the light-emission control unit 162 reports the state of charging when a notification that the value of acceleration detected by the acceleration sensor 31 has exceeded a predetermined value has been received a predefined number of times from the control unit 60 on the cover 10 within a predetermined period. Twice may be given as an example of the predefined number of times.

For example, the light-emission control unit 162 reports the state of charging when the user is holding the generating device 1, which has the cover 10 attached to the main body 100, and has shaken the generating device 1 twice within 3 seconds. As an example of the mode of reporting the state of charging which may be given, residual battery power is displayed by the number of illuminated LEDs 131a among the plurality of LEDs 131a. As an example which may be given, the number of illuminated LEDs 131a may be increased according to greater residual battery power, so that all of the LEDs 131a are illuminated when residual battery power is 100 (%), and half of all the LEDs 131a are illuminated when residual battery power is 50 (%).

The light-emission control unit 162 reporting the state of charging when the value of acceleration detected by the acceleration sensor 31 exceeding a predetermined value has occurred a predefined number of times within a predetermined period is not limited to a case in which the cover 10 is attached to the main body 100. For example, the light-emission control unit 162 may also report the state of charging when the user is holding the cover 10, which is not attached to the main body 100, and has shaken the cover 10 twice within 3 seconds.

Furthermore, the light-emission control unit 162 may report the state of charging when the operation button 121 has been pressed. The light-emission control unit 162 may report the state of charging when the operation button 121 has been pressed regardless of whether or not the cover 10 is attached to the main body 100. Even if the cover 10 is attached to the main body 100, the user is still able to press the operation button 121 of the main body 100 through the cover 10.

Furthermore, the light-emission control unit 162 uses the light-emitting device 131 to report a fault in the vibration generating device 132 when the diagnostic unit 164 has diagnosed a fault in the vibration generating device 132. As an example of a mode of reporting a fault in the vibration generating device 132 which may be given, at least any of the LEDs 131a among the plurality of LEDs 131a may be caused to flash.

An example of heating control processing performed by the control unit 160 in the main body 100 will be described below with the aid of flowcharts.

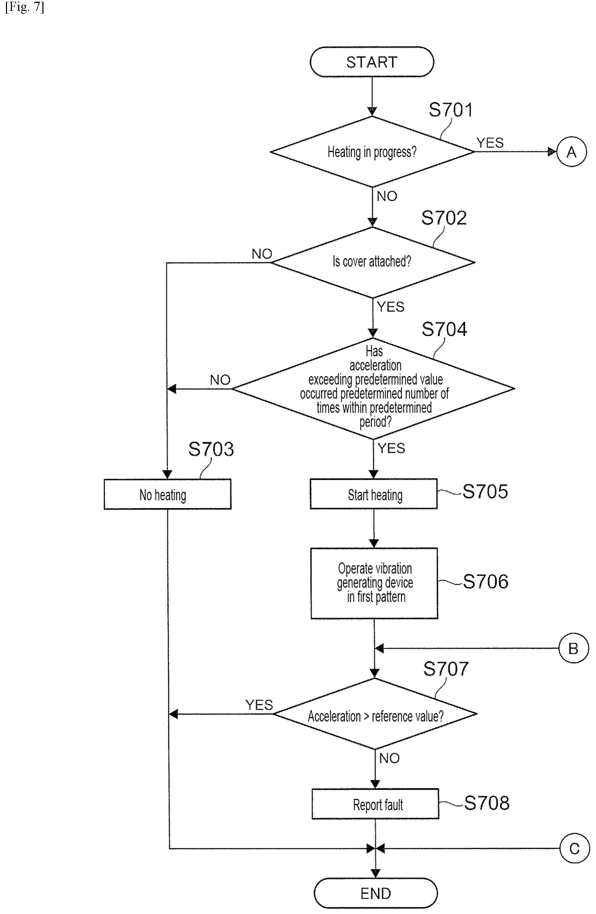

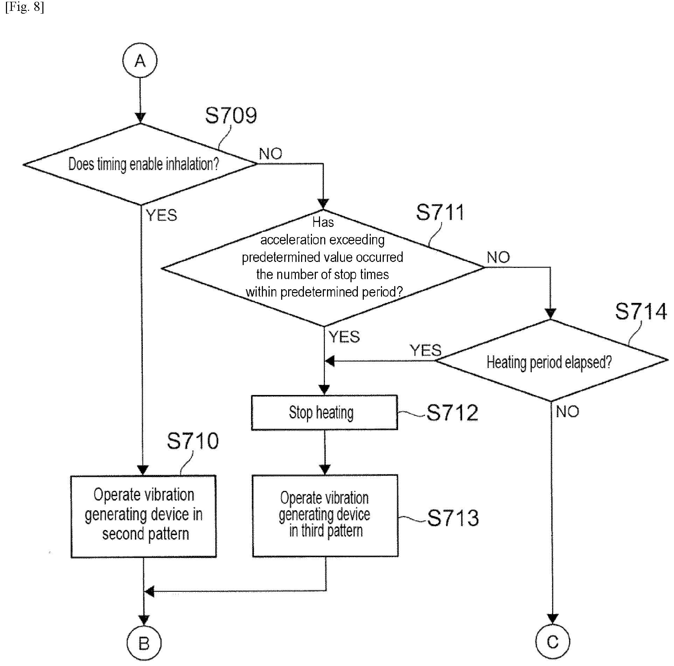

Fig. 7 and 8 are flowcharts showing examples of the heating control processing performed by the control unit 160. The control unit 160 repeatedly implements this processing at preset fixed time intervals (e.g., 1 ms).

The control unit 160 determines whether or not heating is in progress (S701). If heating is not in progress (NO in S701), the control unit 160 judges whether or not the cover 10 is attached (S702). This is processing to judge whether or not the magnetic sensor 122 has detected a magnetic force. If the cover 10 is not attached (NO in S702), the control unit 160 terminates this processing without starting heating of the heating unit 170 (S703).

If the cover 10 is attached (YES in S702), the control unit 160 judges whether or not the value of acceleration detected by the acceleration sensor 31 exceeding a predetermined value has occurred a predetermined number of times within a predetermined period (S704). If the value of acceleration detected by the acceleration sensor 31 exceeding the predetermined value has occurred the predetermined number of times within the predetermined period (YES in S704), the control unit 160 starts heating of the heating unit 170 (S705). This is processing performed by the heating control unit 161. In other words, the heating control unit 161 starts heating of the heating unit 170 when a notification that the value of acceleration detected by the acceleration sensor 31 has exceeded the predetermined value has been received the predetermined number of times from the control unit 60 on the cover 10 within the predetermined period. Meanwhile, if this has not occurred (NO in S704), the control unit 160 terminates this processing without starting heating of the heating unit 170 (S703).

After heating has started, the control unit 160 causes the vibration generating device 132 to operate in the first pattern (S706). This is processing performed by the vibration control unit 163. The control unit 160 then judges whether or not the value of acceleration detected by the acceleration sensor 31 exceeded a reference value (S707). This is processing performed by the diagnostic unit 164. In other words, the diagnostic unit 164 judges whether or not a notification that the value of acceleration detected by the acceleration sensor 31 exceeded a predetermined value was received from the control unit 60 on the cover 10 within a reference period. If the value of acceleration does not exceed the reference value (NO in S707), the control unit 160 reports a fault in the vibration generating device 132 using the light-emitting device 131 (S708). This is processing performed by the light-emission control unit 162. The control unit 160 then terminates this processing. Meanwhile, if the value of acceleration exceeded the reference value (YES in S707), the control unit 160 terminates this processing.

If heating is in progress (YES in S701), the control unit 160 judges whether or not the timing enables inhalation by the user (S709). This is processing in which the vibration control unit 163 judges whether or not the temperature of the substrate 500 has reached a predetermined temperature after the start of heating of the heating unit 170. If the timing enables inhalation (YES in S709), the control unit 160 then causes the vibration generating device 132 to operate in the second pattern (S710). This is processing performed by the vibration control unit 163. The control unit 160 then performs the processing from S707 and onward.

Meanwhile, if the timing does not enable inhalation (NO in S709), the control unit 160 judges whether or not the value of acceleration detected by the acceleration sensor 31 exceeding a predetermined value has occurred a number of stop times within a predetermined period (S711). In other words, the control unit 160 judges whether or not a notification that the value of acceleration detected by the acceleration sensor 31 has exceeded the predetermined value has been received the number of stop times from the control unit 60 on the cover 10 within the predetermined period. If the value of acceleration detected by the acceleration sensor 31 exceeding the predetermined value has occurred the number of stop times within the predetermined period (YES in S711), the control unit 160 stops heating of the heating unit 170 (S712). The processing of S711 and S712 is performed by the heating control unit 161.

After heating has been stopped, the control unit 160 causes the vibration generating device 132 to operate in the third pattern (S713). This is processing performed by the vibration control unit 163. The control unit 160 then performs the processing from S707 and onward.

Meanwhile, if this has not occurred (NO in S711), the control unit 160 judges whether or not the abovementioned heating period has elapsed since the start of heating by the heating unit 170 (S714). If the heating period has elapsed (YES in S714), the control unit 160 performs the processing from S712 and onward. The processing of S714 is performed by the heating control unit 161. If the heating period has not elapsed (NO in S714), the control unit 160 terminates this processing.

As described above, the generating device 1 comprises: the main body 100 having the heating unit 170 and control unit 160 for controlling heating by the heating unit 170; and the cover 10 attached to the main body 100. The cover 10 then comprises the acceleration sensor 31, and the control unit 160 controls operation of the heating unit 170 on the basis of the value of acceleration detected by the acceleration sensor 31. By this means, it is possible to lighten the user operating burden through the cover 10 which is detachable from the main body 100. That is to say, even if the user feels that there is a large operating burden with a configuration requiring, for example, pressing of the operation button 121 in order to control operation of the heating unit 170, it is possible to lighten the user operating burden as compared to the configuration in which operation of the control unit 170 is controlled by pressing the operation button 121 because operation of the heating unit 170 can be controlled by shaking the generating device 1, for example.

For example, the control unit 160 starts heating by the heating unit 170 when the value of acceleration detected by the acceleration sensor 31 exceeding a predefined predetermined value (e.g., 14.7 (m/s²)) has occurred a predefined predetermined number of times (e.g., three times) within a predefined predetermined period (e.g., 3 seconds). By this means, the user can instruct the start of heating by the heating unit 170 by shaking the generating device 1, for example, and the user operating burden can therefore be lightened.

Furthermore, the control unit 160 stops heating by the heating unit 170 when the value of acceleration detected by the acceleration sensor 31 exceeding a predetermined value (e.g., 14.7 (m/s²)) has occurred a predefined number of stop times (e.g., four times) within a predetermined period (e.g., 3 seconds) after the start of heating by the heating unit 170. By this means, the user can instruct stopping of heating by the heating unit 170 by shaking the generating device 1, for example, and the user operating burden can therefore be lightened.

Furthermore, the generating device 1 further comprises the diagnostic unit 164 for diagnosing, on the basis of the value of acceleration detected by the acceleration sensor 31, a fault in the vibration generating device 132 for causing vibration of the main body 100. For example, the diagnostic unit 164 diagnoses a fault in the vibration generating device 132 when a notification that the value of acceleration detected by the acceleration sensor 31 exceeded a reference value was not received from the cover 10 within a reference period after the vibration control unit 163 output a command to actuate the vibration generating device 132. This makes it possible to ascertain with a high degree of accuracy whether or not there is a fault in the vibration generating device 132. The vibration control unit 162 then reports that there is a fault in the vibration generating device 132 by using the light-emitting device 131, thereby allowing the user to ascertain that there is a fault in the vibration generating device 132.

Furthermore, the generating device 1 further comprises the light-emitting device 131 which is an example of a reporting unit for reporting the state of charging when the value of acceleration detected by the acceleration sensor 31 exceeding a predetermined value (e.g., 14.7 (m/s²)) has occurred a predefined number of times (e.g., twice) within a predetermined period (e.g., 3 seconds). For example, the light-emission control unit 162 reports the state of charging by causing flashing of the LEDs 131a of the light-emitting device 131 when a notification that the value of acceleration detected by the acceleration sensor 31 has exceeded a predetermined value has been received a predefined number of times from the control unit 60 on the cover 10 within a predetermined period. By this means, the user can ascertain the state of charging by shaking the generating device 1, for example, and the user operating burden can therefore be lightened as compared to a configuration in which the state of charging is ascertained by pressing the operation button 121, for example. It should be noted that the mode of reporting the state of charging may equally be a display on a display device which displays images, vibration using the vibration generating device 132, or sound output using a sound output device.

Furthermore, covers 10 configured in the manner above may have different types of sensors included in the sensor unit 30, depending on the type of cover 10. For example, one cover 10 may comprise only the acceleration sensor 31, while another cover 10 may comprise sensors for detecting external environment information, such as a temperature sensor, humidity sensor and air pressure sensor. By this means, the user can change the functionality provided by the generating device 1 by replacing the cover 10. Furthermore, by using replaceable covers 10, the external appearance of the generating device 1 can be varied by replacing the cover 10. The user can therefore customize the external appearance and functionality of the generating device 1 according to his or her own preferences, etc., for example. Marketability of the generating device 1 can be improved as a result.

Furthermore, by configuring the cover 10 to be detachable from the main body 100, it is possible to replace only the main body 100 if there is a fault in the main body 100, for example, while the cover 10 can still be used as it is. The cover 10 then comprises the memory unit 40, so information stored in the memory unit 140 of the main body 100 can be transferred to the memory unit 40 of the cover 10 if only the main body 100 is replaced. Examples of information stored in the memory unit 140 of the main body 100 which may be cited include the heating control processing described with the aid of fig. 7, and a program for a control sequence defining temporal changes in target temperature of the heating unit 170 during heating by the heating unit 170. Methods for transferring information include contactless power transmission such as short-range wireless communication, and transmission by providing a USB terminal provided on the cover 10 and connecting a cable to this USB terminal and to the USB terminal 113 of the main body 100.

It should be noted that the cover 10 comprises the acceleration sensor 31 in the embodiments described above, but this is not particularly limiting. The sensor unit 120 in the main body 100 may equally comprise the acceleration sensor 31.

### <Summary>

It should be noted that the present disclosure includes the following features.
(1) An aerosol generating device comprising: a main body having a heating unit and a heating control unit for controlling heating by the heating unit; and a cover attached to the main body, wherein the cover comprises an acceleration sensor, and the heating control unit controls operation of the heating unit on the basis of a value of acceleration detected by the acceleration sensor.
(2) The aerosol generating device as disclosed in (1), wherein the heating control unit permits heating by the heating unit when the value of acceleration detected by the acceleration sensor exceeding a predetermined value has occurred a predetermined number of times within a predetermined period.
(3) The aerosol generating device as disclosed in (1) or (2), wherein the heating control unit stops heating by the heating unit when the value of acceleration detected by the acceleration sensor exceeding a predetermined value has occurred a predetermined number of stop times within a predetermined period after heating by the heating unit has started.
(4) The aerosol generating device as disclosed in any one of (1) to (3), further comprising a reporting unit for reporting a state of charging when the value of acceleration detected by the acceleration sensor exceeding a predetermined value has occurred a predetermined number of times within a predetermined period.
(5) The aerosol generating device as disclosed in any one of (1) to (4), further comprising a diagnostic unit for diagnosing, on the basis of the value of acceleration detected by the acceleration sensor, a fault in a vibration generating device for causing vibration of the main body.

### [Reference Signs List]

1... Aerosol generating device, 10... Cover, 30... Sensor unit, 31... Acceleration sensor, 50... Communication unit, 60... Control unit, 100... Main body, 130... Notification unit, 131... Light-emitting device, 132... Vibration generating device, 160... Control unit, 161... Heating control unit, 162... Light-emission control unit, 163... Vibration control unit, 164... Diagnostic unit, 170... Heating unit

## Claims

1. An aerosol generating device comprising: a main body having a heating unit and a heating control unit for controlling heating by the heating unit; and
a cover attached to the main body,
wherein
the cover comprises an acceleration sensor, and
the heating control unit controls operation of the heating unit on the basis of a value of acceleration detected by the acceleration sensor.

2. The aerosol generating device as claimed in claim 1, wherein the heating control unit permits heating by the heating unit when the value of acceleration detected by the acceleration sensor exceeding a predetermined value has occurred a predetermined number of times within a predetermined period.

3. The aerosol generating device as claimed in claim 1 or 2, wherein the heating control unit stops heating by the heating unit when the value of acceleration detected by the acceleration sensor exceeding a predetermined value has occurred a predetermined number of stop times within a predetermined period after heating by the heating unit has started.

4. The aerosol generating device as claimed in any one of claims 1 to 3, further comprising a reporting unit for reporting a state of charging when the value of acceleration detected by the acceleration sensor exceeding a predetermined value has occurred a predetermined number of times within a predetermined period.

5. The aerosol generating device as claimed in any one of claims 1 to 4, further comprising a diagnostic unit for diagnosing, on the basis of the value of acceleration detected by the acceleration sensor, a fault in a vibration generating device for causing vibration of the main body.
